# EUROPÄISCHE PATENTSCHRIFT

(11) **EP 3 497 746 B1**
(45) Veröffentlichungstag und Bekanntmachung des Hinweises auf die Patenterteilung: **13.04.2022**
(21) Anmeldenummer: 17751768.7
(22) Anmeldetag: 14.08.2017
(51) Int. Cl.: H01Q 1/12, F16B 41/00, H01Q 1/32, H01Q 1/42

(54) **DACHANTENNE MIT VERRASTUNGSDREHKREUZ**
ROOF ANTENNA WITH LATCHING ROTARY CROSS
ANTENNE DE TOIT AVEC CROISILLON D'ENCLIQUETAGE

(30) Priorität: 15.08.2016 DE 102016115087
(43) Veröffentlichungstag der Anmeldung: 19.06.2019
(73) Patentinhaber: Hirschmann Car Communication GmbH, 72654 Neckartenzlingen (DE)
(72) Erfinder: GERNETH, Christian, 72138 Kirchentellinsfurt (DE); AMLER, Ralf, 72663 Großbettlingen (DE)
(74) Vertreter: Patentanwaltskanzlei WILHELM & BECK
(86) Internationale Anmeldenummer: PCT/EP2017/070609
(87) Internationale Veröffentlichungsnummer: WO 2018/033519

(56) Entgegenhaltungen:
- EP-A2- 2 048 384
- DE-A1-102007 008 372
- DE-A1-102012 207 438

## Beschreibung

Die Erfindung betrifft eine Dachantenne zur Montage auf einem Dach eines Fahrzeuges gemäß den Merkmalen des Oberbegriffes des Patentanspruches 1.

Es sind schon viele verschiedene Varianten der Ausgestaltung einer Dachantenne und entsprechende Verfahren zur Montage einer solchen Dachantenne auf einem Dach eines Fahrzeuges bekannt geworden (zum Beispiel aus der DE 10 2005 041 473 A1, der DE 10 2005 044 610 A1 oder der DE 10 2005 044 611 A1).

Aus der DE 10 2012 202 677 ist eine Dachantenne zur Montage auf einem Dach eines Fahrzeuges bekannt, wobei die Dachantenne eine Bodenplatte sowie eine mit der Bodenplatte verbindbare Antennenhaube aufweist und unter der Antennenhaube eine Leiterplatte mit Antennenelementen und zumindest einer Steckverbindung angeordnet ist. Zur Vereinfachung der Montage ist aus diesem Stand der Technik bekannt, dass, nachdem die Dachantenne vertikal nach unten gerichtet durch eine Öffnung in dem Dach des Fahrzeuges mit ihrem Befestigungsbereich durchgeführt worden ist, Rastmittel vorgesehen sind, die eine Vorfixierung der Dachantenne auf dem Dach ermöglichen. Nachdem die Dachantenne diese Vormontageposition eingenommen hat, werden weiterhin vorhandene Befestigungsmittel betätigt, um die Dachantenne dauerhaft, dichtend, verliersicher und unverrückbar an der gewünschten Stelle auf dem Dach des Fahrzeuges festzulegen.

Aus der gattungsbildenden DE 10 2012 207 438 ist eine Dachantenne zur Montage auf einem Dach eines Fahrzeuges bekannt, wobei die Dachantenne eine Bodenplatte sowie eine mit der Bodenplatte verbindbare Antennenhaube aufweist und unter der Antennenhaube eine Leiterplatte mit Antennenelementen und zumindest einer Steckverbindung angeordnet ist, wobei die Bodenplatte Befestigungsmittel für eine Endmontage aufweist, wobei die Befestigungsmittel als ein zentraler Dom mit Schraubgewinde und ein mit dem Dom zusammenwirkendes Drehkreuz ausgebildet ist. Da der Dom mit Schraubgewinde und das Drehkreuz zwar zusammenwirken sollen, jedoch als voneinander separate Bauteile ausgebildet sind, besteht die Gefahr, dass diese beiden Bauteile bei der Montage, sei es bei einer Vormontage unabhängig vom endgültigen Einbauort oder am endgültigen Einbauort, nicht gleichzeitig zur Verfügung stehen oder zumindest eines der Bauteile oder sogar beide Bauteile nach einer Vormontage (zum Beispiel durchgeführt von einem Hersteller der Dachantenne) während des Transportes zum endgültigen Einbauort (am oder im Fahrzeug) verlorengeht.

Der vorliegenden Erfindung liegt nun die Aufgabe zugrunde, diese gattungsbildende Dachantenne hinsichtlich ihres Montageverfahrens und hinsichtlich ihrer Ausgestaltung insbesondere im Hinblick auf eine noch weiter vereinfachte Montage zu verbessern.

Diese Aufgabe ist durch die Merkmale des Patentanspruches 1 gelöst.

Es kann, muss aber nicht das grundlegende Prinzip beibehalten werden, nämlich dass die Befestigungsmittel als ein zentraler Dom mit Schraubgewinde, der nach seiner Montage der Dachantenne in ihrer Vormontageposition in den Innenraum des Fahrzeuges hineinragt, und ein mit dem Dom zusammenwirkendes Drehkreuz ausgebildet sind. Dieses Drehkreuz, welches in einer besonders vorteilhaften Ausgestaltung genau vier in einem rechten Winkel zueinander angeordnete Arme aufweist, befindet sich zunächst in einer Vormontageposition. Dies bedeutet, dass das Drehkreuz derart in einer Lage in Bezug auf die Dachantenne als auch in Bezug auf die Dachöffnung angeordnet ist, in der es ermöglicht wird, die Dachantenne vertikal von oben in Richtung des Innenraumes mit seinen Befestigungsmitteln durchzuführen. Das bedeutet, dass die Dachantenne, genauer deren Bodenplatte bzw. eine an der Bodenplatte angeordnete Dichtung oder andere Elemente, auf der Oberseite des Daches zur Anlage kommen und es danach möglich wird, das Drehkreuz dahingehend zu betätigen, dass es von seiner Vormontageposition (Vorfixierung) in seine Endmontageposition gebracht werden kann, nachdem mittels der Rasthaken, die ebenfalls von der Bodenplatte vertikal nach unten durch die Dachöffnung hineinragen, vorfixiert worden ist. Das heißt, dass die Dachantenne von oben auf das Dach aufgesetzt und mit seinen Rastmitteln und Befestigungsmitteln durch die Dachöffnung geführt wird. Nachdem die Dachantenne auf der Oberseite des Daches zur Anlage gekommen ist, wobei mittels der Rastmittel eine Vorfixierung stattfand, können die Befestigungsmittel, das heißt das Drehkreuz, betätigt werden, um damit die Dachantenne in ihrer Endmontageposition dauerhaft, lagerichtig und unverrückbar auf dem Dach des Fahrzeuges festlegen zu können. Die Drehbewegung des Drehkreuzes auf dem mit dem Schraubgewinde versehenen zentralen Dom hat den Vorteil, dass eine schnelle, ggf. werkzeuglose Montage erfolgen kann. Außerdem kann die Kraft, mit der die Bodenplatte der Dachantenne auf dem Fahrzeugdach zur Anlage kommt, durch die Drehbewegung des Drehkreuzes sehr genau eingestellt werden. Dies hat insbesondere dann den Vorteil, wenn zwischen der Unterseite der Bodenplatte und der Oberfläche des Daches eine Dichtung angeordnet ist. Damit wird bewirkt, dass die Dichtung optimal ihre Dichtungswirkung ausüben kann, um zu vermeiden, dass die Dichtwirkung bei nicht ausreichender Quetschung der Dichtung nicht ausreichend ist oder bei zu großer Quetschung ebenfalls nicht optimal ist. Außerdem ist der Vorteil gegeben, dass Toleranzen, insbesondere unterschiedliche Dicken des Daches, ausgeglichen werden können. Damit kann die erfindungsgemäße Dachantenne auch sehr flexibel bei unterschiedlichen Fahrzeugen, die unterschiedliche Dachstärken aufweisen, montiert werden.

Erfindungsgemäß ist zur Lösung der Aufgabe vorgesehen, dass an dem Dom zumindest zwei als erster O-Ring (20) und ein weiterer O-Ring (35) ausgebildete formelastische Elemente angeordnet und befestigt sind, wobei diese Elemente den Dom bewegbar an dem Drehkreuz und der Bodenplatte fixiert.

Dadurch werden in vorteilhafter Weise diese beiden Bauteile in ihrer Lage zueinander durch einen Formschluss vorpositioniert und können danach nicht mehr verloren gehen. D. h., dass sie an dem Einbauort, aber auch schon während des Transportes der vormontierten Dachantenne von dem Hersteller der Dachantenne bis hin zu deren Einbauort nicht mehr verloren gehen können und jederzeit für die Montage zur Verfügung stehen. Idealerweise sind sogar beide Bauteile nicht nur zueinander in ihrer Position festgelegt, sondern auch schon in einer bestimmten Position insbesondere der Vormontageposition, an der Bodenplatte festgelegt. Dadurch wird eine Dachantenne zur Verfügung gestellt, die von Hersteller hergestellt und in einem Auslieferungszustand bereitgestellt wird, der es gestattet, dass die vormontierte Dachantenne sehr schnell und einfach an ihrem Einbauort in oder an dem Fahrzeug angeordnet und in ihrer endgültigen Sollposition festgelegt werden kann. Dies erfolgt insbesondere dadurch, dass das Drehkreuz von seiner Vormontageposition (insbesondere der Anlieferungsposition) in die bestimmungsgemäße Endmontageposition (Endposition) gebracht wird.

Ergänzend zu der Festlegung des Domes an dem Drehkreuz mittels des formelastischen Elementes ist nach der Erfindung vorgesehen, dass mittels eines weiteren formelastischen Elementes der Dom an der Bodenplatte festgelegt wird. Auch hierdurch ergibt sich der Vorteil, dass auch der Dom zusammen mit dem Drehkreuz (weil Dom und Drehkreuz über einen eigenes Form elastisches Element zueinander angeordnet sind) nicht verloren gehen können und die gesamte Anordnung der Dachantenne in einen Vormontagezustand, d. h. vorbereitet für eine Auslieferung und eine anschließende Montage, gebracht wurde.

Bei der Erfindung ist vorgesehen, dass das eine formelastische Element ein O-Ring ist und der Dom als eine Schraube ausgebildet ist, wobei die Schraube endseitig einem Schraubenkopf abgewandt eine umlaufende Nut zur Aufnahme des O-Rings aufweist. Damit lässt sich der Formschluss zur verlierersicheren Anordnung einer Schraube an der Bodenplatte besonders einfach realisieren. Damit der O-Ring einfach an der Schraube dauerhaft festgelegt werden kann, weist die Schraube endseitig eine umlaufende Nut auf, in die der O-Ring eingesetzt wird. Er wird dort dauerhaft gehalten und kann durch Formschluss mit der Innenkontur der Bodenplatte, insbesondere einer zylinderförmigen Kontur der Bodenplatte, zusammenwirken, sodass durch diesen Formschluss die Schraube an der Bodenplatte in einer Position festgelegt ist, wobei diese Position jedoch durch Überwindung der Kraft, die von dem Formschluss gebildet wird, geändert werden kann.

Bei der Erfindung ist außerdem vorgesehen, dass das eine formelastische Element ein O-Ring und der Dom als eine Schraube ausgebildet ist, wobei die Schraube endseitig einem Schraubenkopf zugewandt eine umlaufende Nut zur Aufnahme des O-Rings aufweist. Damit lässt sich der Formschluss zur verliersicheren Anordnung einer Schraube an dem Drehkreuz besonders einfach realisieren. Damit der O-Ring einfach an der Schraube dauerhaft festgelegt werden kann, weist die Schraube endseitig, vorzugsweise unterhalb des Schraubenkopfes, eine umlaufende Nut auf, in die der O-Ring eingesetzt wird. Er wird dort dauerhaft gehalten und kann durch Formschluss mit der Innenkontur des Drehkreuzes zusammenwirken, sodass durch diesen Formschluss die Schraube an dem Drehkreuz in einer Position festgelegt ist, wobei diese Position jedoch durch Überwindung der Kraft, die von dem Formschluss gebildet wird, geändert werden kann.

Dabei weist die Schraube an zwei voneinander beanstandeten Stellen jeweils eine umlaufende Nut auf, in die jeweils ein formelastisches Element, insbesondere ein O-Ring, eingesetzt ist. Mit dem einen Element wird die Verliersicherheit zwischen der Schraube und dem Drehkreuz hergestellt, wobei mit dem weiteren Element die Verliersicherheit zwischen der Schraube und der Bodenplatte hergestellt wird. Außerdem wird mit dem letztgenannten Element die Einheit, bestehend aus Schraube und Drehkreuz, verliersicher und in einer Vormontageposition an der Bodenplatte der Dachantenne festgelegt.

In Weiterbildung der Erfindung ist vorgesehen, dass die Bodenplatte eine umlaufende Nut zur Aufnahme des O-Rings in der Vormontageposition der Schraube in Bezug auf das Drehkreuz und dessen Festlegung an der Bodenplatte aufweist. In diese Nut der Bodenplatte, die allgemein auch eine andere Form, zum Beispiel eine Senkung, aufweisen kann, kommt der O-Ring, der an dem dem Schraubenkopf abgewandten Ende der Schraube angeordnet ist, zur Anlage und bildet damit den Form Schluss. Durch diesen O-Ring, der in der umlaufenden Nut in der Schraube eingesetzt ist, wird zusammen mit der Senkung bzw. der umlaufenden Nut in der Bodenplatte, insbesondere im Bereich einer zylinderförmigen Gestaltung der Bodenplatte, der Formschluss realisiert, um die Schraube und in bevorzugter Weise die Einheit aus Schraube und Drehkreuz in einer vorgegebenen Position an der Bodenplatte festzulegen. Wird die Schraube betätigt, kann diese Lage der Schraube in Bezug auf die Bodenplatte verändert werden. Dies erfolgt beispielsweise durch eine Drehbewegung der Schraube, die in einem Teilabschnitt ein Gewinde aufweist, das mit einem Gewinde der Bodenplatte, insbesondere im Bereich dessen zylinderförmigen Gestaltung, zusammenwirkt. In der Vormontageposition stehen das Gewinde der Schraube und das Gewinde der Bodenplatte noch nicht oder nur in einem kleinen Bereich in Wirkverbindung, sodass zunächst durch axiale Bewegung der Schraube die beiden Gewinde ineinandergreifen können oder, wenn die beiden Gewinde schon in einem kleinen Bereich in Wirkverbindung standen, durch Drehbewegung der Schraube die Einheit bestehend aus Drehkreuz und Schraube von der Vormontageposition (Auslieferungszustand) in die Endmontageposition (Endposition der Einheit nach der Anordnung der Dachantenne auf dem Dach) gebracht werden.

Wie vorstehend beschrieben weist die Schraube zwei umlaufende Nuten, auf, in die jeweils ein O-Ring eingesetzt ist. Diese Anordnung ist bevorzugt, da optisch erkannt werden kann, ob beide O-ringe, montiert worden sind.

In Weiterbildung der Erfindung ist das Drehkreuz derart ausgebildet, dass es mit seinen Enden der Arme in einer Vormontageposition durch eine Dachöffnung des Daches vertikal hindurchgeführt werden kann und in seiner Endmontageposition mit seinen Enden die Unterseite des Daches hintergreift. Durch die Festlegung der Dachantenne auf dem Dach des Fahrzeuges mittels der Enden des Drehkreuzes kann eine sehr gute Hebelwirkung erzielt werden, woraus eine hohe Kraft resultiert, mittels der die Dachantenne auf dem Dach des Fahrzeuges festgelegt wird. Zur Montagevereinfachung können diese Enden an ihrer Seiten- und/oder Oberfläche, die in Richtung der Unterseite des Daches weist, abgeschrägt sein. Weiterhin ist es möglich, dass die in Richtung der Unterseite des Daches weisende Oberfläche des Drehkreuzes in seiner Endmontageposition Dorne, Stege oder dergleichen aufweist. Diese Mittel können dann, wenn auch das Drehkreuz und der zentrale Dom aus einem elektrisch leitfähigem Werkstoff bestehen, für die Masseanbindung der Dachantenne dienen, wenn auch das Fahrzeugdach aus einem metallischen Werkstoff besteht. Bestehen die genannten Elemente nicht aus einem metallischen Werkstoff, kann daran gedacht werden, die Masseanbindung über andere Elemente, zum Beispiel Steckverbinder, zu realisieren.

In Weiterbildung der Erfindung ist vorgesehen, dass an der Bodenplatte zumindest ein Anschlag zur Begrenzung des Drehwinkels des Drehkreuzes angeordnet ist. Dieser zumindest eine Anschlag, vorzugsweise ein Endanschlag für die Vormontageposition und ein Endanschlag für die Endmontageposition, hat den Vorteil, dass zwecks Montage der Dachantenne ein Bewegungsbereich des Drehkreuzes vorgegeben ist. So wird in besonders vorteilhafter Weise das Drehkreuz nur zwischen diesen beiden Anschlägen, die jeweils eine Ausgangsposition und eine Endposition definieren, bewegt. Dadurch kann auch gleichzeitig das Anlagemoment der Dachantenne auf dem Dach des Fahrzeuges mit seinem vorgebbaren Wert eingestellt werden.

In Weiterbildung der Erfindung ist an der Bodenplatte zumindest eine Führungsrippe, vorzugsweise zwei gegenüberliegende Führungsrippen oder zwei in einem rechten Winkel zueinander ausgerichtete Führungsrippen, angeordnet. Diese von der Bodenplatte vertikal nach unten, das heißt in Richtung der Dachöffnung des Fahrzeuges weisende Führungsrippen haben den Vorteil, dass sie der Kontur der Dachöffnung entsprechen und eine Führung und Ausrichtung der Dachantenne sowohl bei der Vormontage als auch bei der Endmontage bewirken. Diese zumindest eine Führungsrippe ist in vorteilhafter Weise einstückig mit der Bodenplatte ausgeführt (zum Beispiel bestehen Führungsrippe und Bodenplatte aus einem Kunststoffspritzguss) oder werden zusätzlich an der Bodenplatte lösbar oder unlösbar angefügt.

In Weiterbildung der Erfindung überdeckt das Drehkreuz in seiner Vormontageposition die zumindest eine Steckverbindung und gibt sie in der Endmontageposition wieder frei. Hier ist von entscheidendem Vorteil, dass das Drehkreuz derart in eine Vormontageposition gebracht wird, dass es vorzugsweise mit jeweils einem Arm jeweils einen Steckverbinder überdeckt. In diesem Auslieferungszustand der Dachantenne sind die Steckverbinder, die meistens als Buchse ausgebildet sind, vor Beschädigungen oder Verschmutzungen geschützt. Erst wenn die Dachantenne vorfixiert auf dem Dach festgelegt wurde und zwecks Endmontage das Drehkreuz von seiner Vormontageposition in seine Endmontageposition gebracht worden ist, gibt dieses den zumindest einen Steckverbinder frei, so dass es erst möglich wird, den Steckverbinder der Dachantenne mit dem Gegensteckverbinder zum Beispiel am Ende eines Kabels zusammenzustecken, wenn die Dachantenne in ihrer Sollposition endgültig auf dem Dach des Fahrzeuges festgelegt worden ist.

Weitere Ausgestaltungen der Erfindung sind in den Unteransprüchen angegeben, aus denen sich die entsprechenden Vorteile ergeben. Außerdem sind diese Ausgestaltungen im Folgenden im Zusammenhang mit der Figurenbeschreibung erläutert.

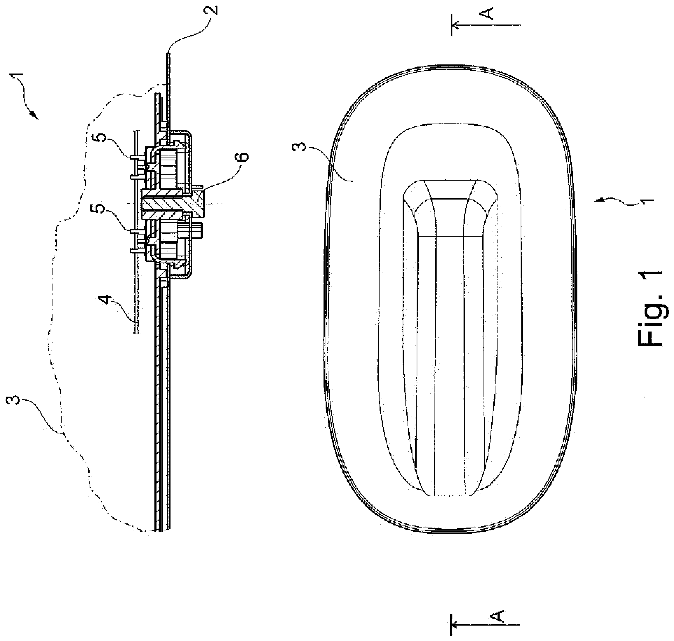

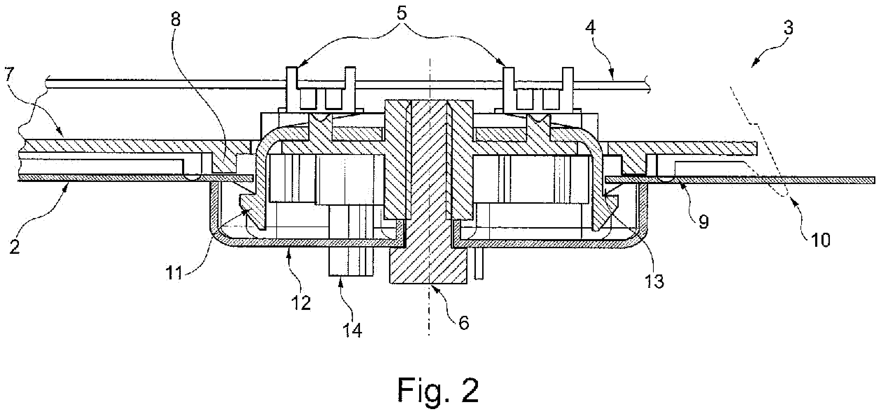

Die Figuren 1 bis 4 zeigen, soweit im Einzelnen dargestellt, unterschiedliche Ansichten einer Dachantenne 1 zur Montage auf einem Dach 2 eines Fahrzeuges. In Figur 1, linke obere Darstellung, ist die Dachantenne 1 erkennbar, die endgültig auf dem Dach 2 montiert worden ist. Prinzipiell umfasst diese Dachantenne 1 eine Antennenhaube 3, wobei unter der Antennenhaube 3 beispielsweise eine Leiterplatte 4 mit nicht dargestellten Antennenelementen (zum Beispiel für Telefon, GPS, TV und dergleichen) untergebracht ist. Die Leiterplatte 4 kann vertikal nach unten weisende Steckverbindungen 5 (oder auch nur eine Steckverbindung) aufweisen, wobei sie jedoch nicht zwangsweise die zumindest eine Steckverbindung aufweisen muss. Die Kontaktierung der unter der Antennenhaube 3 angeordneten Antennenelemente kann auch über andere Möglichkeiten, wie zum Beispiel Kabel, mit nachgeschalteten elektronischen Geräten verbunden werden. Weiterhin ist in dieser Darstellung ein zentraler Dom 6 erkennbar. In der Figur 1, linke untere Darstellung, ist die Dachantenne 1 von oben, und in der Figur 1, rechte Darstellung, von unten gezeigt, wobei im Folgenden auf die Figuren 2 bis 4 zwecks Erläuterung des Aufbaus der erfindungsgemäßen Dachantenne 1 und ihrer Montage auf dem Dach 2 Bezug genommen wird.

In Figur 2 sind zusätzlich zu den schon in Figur 1 gezeigten und beschriebenen Elementen eine Bodenplatte 7 der Dachantenne 1 gezeigt, wobei die Bodenplatte 7 nach unten weisende Gegenlager 8 aufweist. Mit diesem Gegenlager 8 wird bei diesem Ausführungsbeispiel die Distanz zwischen der Unterseite der Bodenplatte und der Oberseite des Daches 2 definiert. Die Gegenlager 8 können beispielsweise radial umlaufend ausgebildet sein und können alternativ weggelassen werden. Weiterhin ist eine Innendichtung 9 vorhanden, die zwischen der Unterseite der Bodenplatte und der Oberseite des Daches 2 angeordnet ist. Auch diese Innendichtung 9 kann radial umlaufend sein, um eine Abdichtung zwischen dem Außenbereich um die Dachantenne 1 herum und dem Innenbereich des Fahrzeuges vorzunehmen. Alternativ oder ergänzend zu der Innendichtung 9 ist eine Außendichtung 10 vorgesehen, wobei die Außendichtung 10 eine Abdichtung zwischen der umlaufenden Unterkante der Antennenhaube 3 und der Oberseite des Daches 2 bewirkt.

Zur Vorfixierung der Dachantenne 1 auf dem Dach 2 sind Rasthaken 11 vorhanden. Zur endgültigen Montage der Dachantenne 1 auf dem Dach ist ein Drehkreuz 12 vorgesehen, welches sich auf dem Schraubgewinde des zentralen Domes 6 befindet. In dieser Ausgestaltung in der Figur 2 ist schon gezeigt, dass die Dachantenne 1 in ihrer endgültigen Position auf dem Dach 2 festgelegt worden ist. Dies erfolgte dadurch, dass die Dachantenne 1 von oben durch eine Dachöffnung 13 in dem Dach 2 mit ihrem Befestigungsbereich hindurchgeführt worden ist. Dies bewirkte, dass mittels der Rasthaken 11 eine Vormontageposition eingenommen wurde. Sind die Gegenlager 8 vorhanden, so ist deren axiale Höhe so gewählt, bzw. die Länge der nach unten weisenden Rasthaken ist ebenfalls so gewählt, dass die Rasthaken auf jeden Fall die Unterseite des Daches hintergreifen können, bevor die Unterseite der Gegenlager auf der Oberseite des Daches 2 zur Anlage kommen. Erst nachdem die Dachantenne 1 diese Vormontageposition, in der sie schon weitestgehend unverrückbar auf dem Dach 2 festgelegt wurde, erreicht hat, wird das Drehkreuz 12 betätigt und die Dachantenne 1 in ihrer endgültigen Lage sicher, dauerhaft sowie unverrückbar, ggf. jedoch wieder lösbar, auf dem Dach 2 des Fahrzeuges festgelegt. Weiterhin sind in Figur 2 schon zumindest ein Anschlag 14, vorzugsweise mehrere Anschläge, erkennbar, auf die im Weiteren noch eingegangen wird.

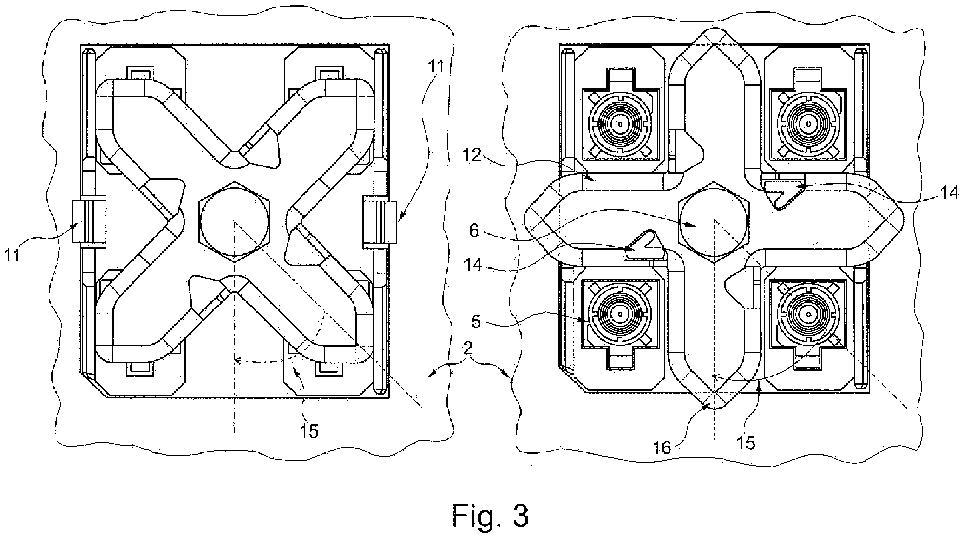

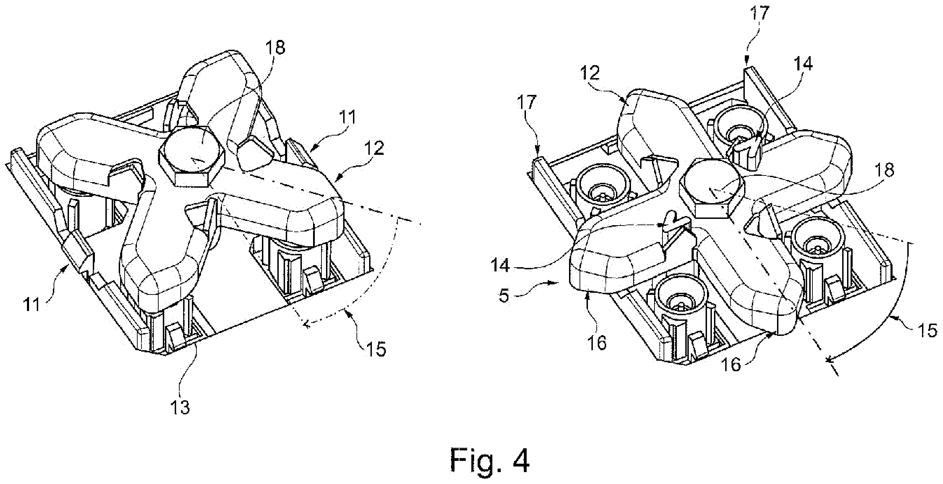

Die Figuren 3 und 4 zeigen einmal in zweidimensionaler Darstellung (Figur 3) und einmal in dreidimensionaler Darstellung (Figur 4) die Dachantenne 1 mit ihrem Befestigungsbereich von unten, das heißt aus Sicht des Innenraumes des Fahrzeuges mit Blickrichtung auf die Unterseite des Daches 2. In diesen Darstellungen ist links die Vormontageposition ( bzw. eine sogenannte Anlieferungsposition, in der die Dachantenne von einem Zulieferer an den Automobilhersteller geliefert wird) und rechts die Endmontageposition dargestellt. In den Ansichten von unten sind sehr gut die Anschläge 14 erkennbar, mit der die Begrenzung des Drehwinkels 15 des Drehkreuzes 12 bewirkt wird. Das heißt bei Betrachtung der linken Darstellung in ihrer Anlieferungsposition kann das Drehkreuz 12 nicht gegen den Uhrzeigersinn verdreht werden. Dies ist nur möglich, indem das Drehkreuz 12 um den zentralen Dom herum im Uhrzeigersinn gedreht wird. Diese Drehbewegung kann so lange erfolgen, bis der jeweils eine Arm des Drehkreuzes 12 an seinen gegenüberliegenden Anschlag 14 zur Anlage kommt. Das heißt, dass bei dieser Ausgestaltung der Erfindung in besonders vorteilhafter Weise der Drehwinkel 15 des Drehkreuzes 12 bei dessen Bewegung von der Vormontageposition in die Endmontageposition maximal 45 Grad beträgt. Sind die Anschläge 14 nicht vorhanden oder ist zum Beispiel nur ein einziger Anschlag 14 vorhanden, kann der Drehwinkel 15 des Drehkreuzes 12 selbstverständlich größer sein. Er kann auch kleiner als 45 Grad sein und auch mehr als eine Umdrehung betragen. Wird mehr als eine Umdrehung des Drehkreuzes 12 um den zentralen Dom 6 herum bewirkt, können wie vorstehend schon beschrieben größere Toleranzen bzw. unterschiedliche Dachstärken ausgeglichen werden.

Weiterhin ist erkennbar, dass die Arme des Drehkreuzes 12 jeweils ein Ende 16 aufweisen, wobei das Drehkreuz 12 mit dem Ende 16 seiner Arme durch die Dachöffnung 13 hindurchgeführt werden kann und die Enden 16 der Arme des Drehkreuzes 12 nach dessen Verdrehung die Unterseite des Daches 2 hintergreifen. Mit der in den rechten Darstellungen der Figuren 3 und 4 gezeigten Position des Drehkreuzes 12 wird somit die Dachantenne 1 dauerhaft auf dem Dach 2 des Fahrzeuges festgelegt. Außerdem sind in den Figuren 3 und 4 die zumindest eine Führungsrippe, hier zumindest zwei sich gegenüberliegende Führungsrippen 17 gezeigt. Die Lage der Führungsrippen 17 an der Bodenplatte sowie die Länge der Führungsrippen 17 entspricht der Geometrie der Dachöffnung 13, so dass die Dachantenne in ihrer Sollposition ausgerichtet auf dem Dach 2 festgelegt werden kann. Dabei sind die Geometrie (Ausschnitt) der Dachöffnung 13 sowie die Geometrie der Führungsrippen (Anordnung, Länge und dergleichen) so gewählt, dass die Dachantenne 1 nur in einer einzigen Position, das heißt in ihrer Sollposition, durch die Dachöffnung 13 durchgeführt und vorfixiert sowie endfixiert werden kann.

Schließlich kann den Figuren 3 und 4 die vorteilhafte Ausgestaltung des Drehkreuzes 12 dahingehend entnommen werden, dass es in der Vormontageposition (Anlieferungsposition) den zumindest einen Steckverbindung 5 überdeckt (linke Darstellung der Figuren 3 und 4) und die Steckverbindung 5 bzw. die hier genau vier vorhandenen Steckverbinder 5, in der Endmontageposition (Montageposition) freigibt.

Das Drehkreuz 12 ist entweder derart gestaltet, dass es werkzeuglos von Hand betätigt wird. Um die Montage jedoch weiter zu vereinfachen, kann daran gedacht werden, dass das Drehkreuzmittel, insbesondere einen Sechskantvorsprung 18, zu seiner Betätigung mittels eines Werkzeuges aufweist. Außerdem sind in besonders vorteilhafter Weise Mittel zur Arretierung des Drehkreuzes 12 in der Vormontageposition (Anlieferungsposition) vorhanden. Damit wird sichergestellt, dass die Arme des Drehkreuzes 12 die jeweilige Steckverbindung 5 so lange überdecken, so lange die Dachantenne 1 noch nicht auf dem Dach des Fahrzeuges montiert wurde.

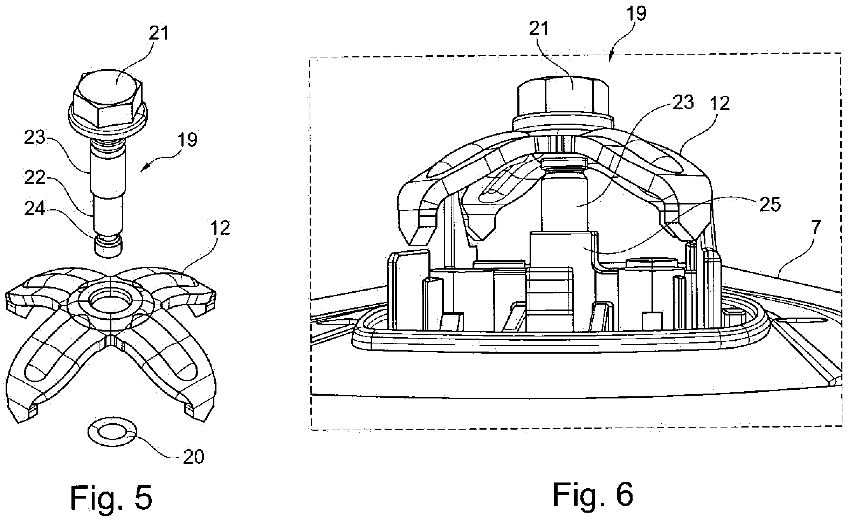

Basierend oder auch abweichend von der Ausgestaltung der Dachantenne, wie sie in den Figuren 1 bis 4 dargestellt ist, wird die Erfindung weiter in den Figuren 5 bis 11 erläutert und im Folgenden beschrieben.

In Figur 5 ist dargestellt, dass nach wie vor ein Drehkreuz 12, welches auch schon in den Figuren 1 bis 4 dargestellt ist, zum Einsatz kommt. Dieses Drehkreuz 12 wirkt mit der Bodenplatte 7 zusammen.

Als Befestigungsmittel, welches mit dem Drehkreuz 12 zusammenwirkt, ist eine Schraube 19 vorgesehen, wobei als formelastisches Element ein O-Ring 20 zum Einsatz kommt. Die Schraube 19 weist einen Schraubenkopf 21 auf, der beispielsweise wie dargestellt sechseckig geformt ist. Weiterhin weist die Schraube 19 einen gewindelosen Abschnitt 22 sowie einen Gewindeabschnitt 23 auf. Endseitig, also dem Schraubenkopf 21 abgewandt, ist eine umlaufende Nut 24 vorgesehen, in die der bereitgestellte O-Ring 20 eingesetzt wird. Dieser in die Nut 24 eingesetzte O-Ring 20 wirkt mit der Bodenplatte 7 zusammen.

In Figur 6 ist die Einheit, bestehend aus Schraube 19 und Drehkreuz 12, in der Vormontageposition an der Bodenplatte 7 dargestellt. Es ist erkennbar, dass die Bodenplatte 7 vorzugsweise einen zylinderförmigen Abschnitt 25 aufweist, der entweder einstückig von der Bodenplatte 7 gebildet ist oder ein separates Bauteil bildet, welches an der Bodenplatte 7 angeordnet wird. Die Schraube 19 ist mit dem O-Ring 20 sowie mit dem gewindelosen Abschnitt 22 in die Bodenplatte 7, insbesondere in deren zylinderförmigen Abschnitt 25, eingesetzt. In dieser Position wird die Schraube 19 zusammen mit dem Drehkreuz 12 durch Formschluss über den O-Ring 20 verliersicher an der Bodenplatte 7 gehalten. Dies lässt sich besonders einfach bewerkstelligen, da lediglich die Schraube 19 mit dem O-Ring 20 in den zylinderförmigen Abschnitt 25 eingedrückt werden muss. Es kann aber auch daran gedacht werden, die Schraube 19 schon über eine Drehbewegung in den zylinderförmigen Abschnitt 25 einzudrehen, sodass ein kleiner Teil des Gewindeabschnittes 23 mit dessen Außengewinde in ein Innengewinde des zylinderförmigen Abschnittes 25 in Eingriff kommt.

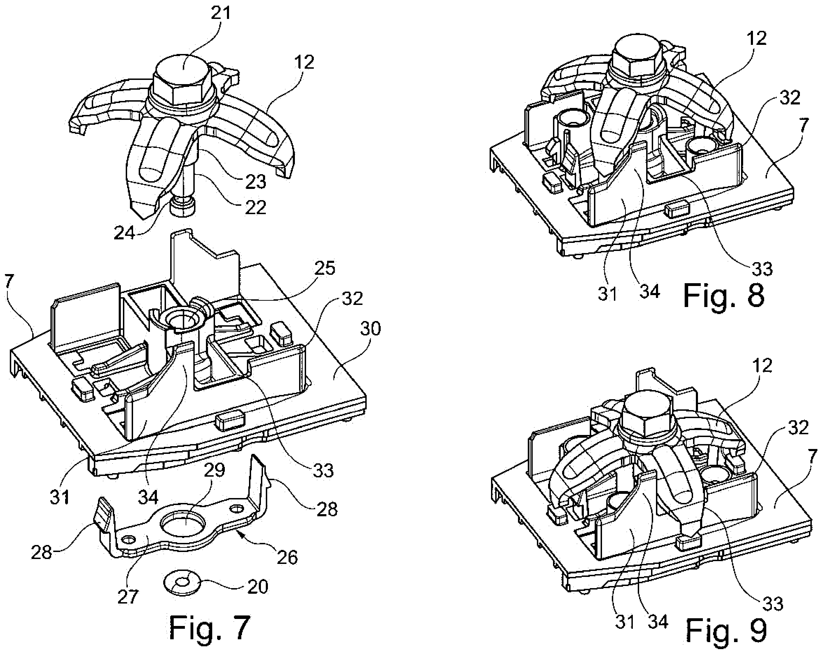

In Figur 7 sind die beteiligten Bauelemente, mit denen die Befestigung der Dachantenne realisiert wird, in einer Explosionsdarstellung gezeigt. Während bei der Ausgestaltung, die in den Figuren 1 bis 4 gezeigt ist, Rasthaken für eine Vorfixierung der Bodenplatte 7 an dem Dach von der Bodenplatte selber gebildet sind, sind bei dieser Ausgestaltung die Rastmittel als eigenständiges Bauteil realisiert, nämlich als Rastmittel 26. Diese Rastmittel 26 weisen einen in etwa länglichen Träger 27 auf, an dessen Enden abgewinkelt Rasthaken 28 angeordnet sind. Vorzugsweise genau in der Mitte des Trägers 27 ist eine Öffnung 29 für die Durchführung der Schraube 19 vorhanden.

Die Bodenplatte 7 weist ausgehend von ihrer Grundfläche 30 als stegartiges Gebilde zumindest eine Begrenzungsfläche 31 auf. Wie in Figur 7 dargestellt sind zwei parallel zueinander verlaufende gleichartig ausgebildete Begrenzungsflächen 31 vorhanden. Die Begrenzungsfläche 31 weist eine Auflagekante 32, einen Ausschnitt 33 sowie einen Anschlag 34 auf. Diese Ausgestaltung und Funktion der Begrenzungsfläche 31 wird im folgenden anhand der Figuren 8 und 9 näher erläutert.

Figur 8 zeigt die Vormontageposition der Befestigungsmittel, wohingegen in Figur 9 die Endmontageposition gezeigt ist, allerdings zur Vereinfachung der Darstellung unter Weglassung des Daches des Fahrzeuges.

In Figur 8 ist die Vormontageposition (Auslieferungszustand) dadurch gekennzeichnet, dass die Einheit, bestehend aus Schraube 19 und Drehkreuz 12, in den zylinderförmigen Vorsprung 25 der Bodenplatte 7 eingesetzt worden ist. In diesem Zustand liegt der zumindest eine Arm, vorzugsweise die beiden gegenüberliegenden Arme, des Drehkreuzes mit seinem Ende, insbesondere einem spitzgeformten Ende, auf der Auflagekante 32 der Begrenzungsfläche 31 auf. Dadurch wird eine definierte Lage dieser Einheit in Bezug auf die Bodenplatte 7 realisiert. Aufgrund der Ausrichtung dieser Einheit in Bezug auf die Bodenplatte 7 ist es möglich, die Bodenplatte 7 durch die Öffnung in dem Dach des Fahrzeuges einzusetzen. Ist dies erfolgt, erfolgt zunächst eine Vorfixierung der Dachantenne mittels der Rasthaken 28 der Rastmittel 26. Diese können optional auch entfallen.

Ist die Dachantenne wie vorstehend beschrieben durch die Öffnung in dem Dach des Fahrzeuges eingesetzt worden (mit oder ohne Vorfixierung), kann durch Betätigung der Schraube 19, beispielsweise mittels eines geeigneten Werkzeuges, welches auf den Schraubenkopf 21 aufgesetzt wird, das Drehkreuz 12 um einen gewissen Winkel verdreht werden. Dieser Winkel ist bei einem Vergleich der Figuren 8 und 9 erkennbar. Idealerweise ist dieser Winkel kleiner 45°. Die Verdrehung gestattet es, dass die äußeren Enden der Arme des Drehkreuzes in Überdeckung mit der Unterseite des Daches kommen können, was vor der Verdrehung nicht der Fall war. Durch die Betätigung der Schraube 19 wird nicht nur das Drehkreuz 12 verdreht, bis der jeweilige Arm des Drehkreuzes 12 an dem Anschlag 34 der Begrenzungsfläche 31 zur Anlage kommt, sondern auch die Schraube 12 mit ihrem Gewindeabschnitt 23 weiter in den zylinderförmigen Vorsprung 25 (oder alternativ ein Gewinde in der Bodenplatte 7) hineingedreht. Diese Betätigung der Schraube 19 bewirkt somit nicht nur eine Drehung des Drehkreuzes 12, sondern auch eine axiale Bewegung des Drehkreuzes 12 in Richtung der Grundfläche 30 der Bodenplatte 7, nachdem der Arm des Drehkreuzes 12 nicht nur an dem Anschlag 34 zur Anlage gekommen ist, sondern sich auch im Bereich des Ausschnittes 33 der Begrenzungsfläche 31 befindet. Durch diese axiale Bewegung des Drehkreuzes 12 wird die gesamte Dachantenne an dem Dach des Fahrzeuges festgelegt, da zum einen die Grundfläche 30 der Bodenplatte 7 auf der Oberfläche des Daches aufliegt und von der anderen Seite die Endbereiche der Arme des Drehkreuzes 12 gegen die Unterseite des Daches zur Anlage kommen. Dadurch wird die Dachantenne dauerhaft in ihrer Endposition auf dem Dach des Fahrzeuges festgelegt. Ist die Bodenplatte 7 entsprechend gestaltet (bzw. deren zylinderförmigen Vorsprung 25) wird bewirkt, dass auch der O-Ring 20 in der Endposition nach der endgültigen Montage in diesem Bereich verbleibt und damit wirksam und dauerhaft ein Verdrehen, insbesondere ein Lösen, der Schraube 19 verhindert. Außerdem verhindert die Lage des Arme des Drehkreuzes 12 innerhalb des Ausschnittes 33 der Begrenzungsfläche 31 ein Verdrehen des Drehkreuzes 12 in seiner Endposition.

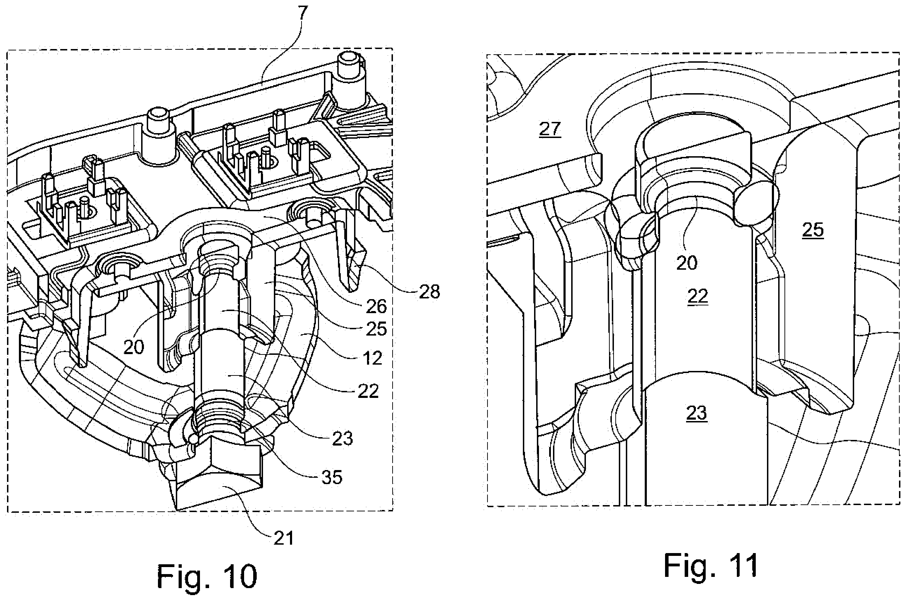

In den Figuren 10 und 11 sind schließlich Ansichten gezeigt, die die Innenkontur der Bodenplatte 7 im Zusammenspiel mit der Schraube 19 zeigen. Es ist erkennbar, dass die Bodenplatte 7 den zylinderförmigen Vorsprung 25 aufweist. Anstelle eines solchen Vorsprunges kann die Bodenplatte 7 gegebenenfalls auch geometrisch bei gleicher Funktion anders gestaltet sein. In diesen Figuren ist die Vormontageposition der Schraube 19 mit ihrem O-Ring 20 erkennbar. Dieser O-Ring 20 liegt an einer entsprechenden Innenkontur der Bodenplatte 7, genauer an der Innenkontur des zylinderförmigen Vorsprung 25, an und realisiert dort den gewünschten Formschluss. Zu diesem Zweck weist die Bodenplatte 7 im Bereich des zylinderförmigen Vorsprunges 25 eine entsprechende Innenkontur, zum Beispiel eine Senkung, eine umlaufende Nut oder dergleichen, auf (Figur 11).

Mit Verweis auf Figur 10 ist noch zu ergänzen, dass die Schraube 19 nicht nur den O-Ring 20, der am Ende des gewindelosen Abschnittes 22 angeordnet ist, trägt, sondern dass auch unterhalb des Schraubenkopfes 21 eine weitere umlaufende Nut vorgesehen ist, in die ein weiterer O-Ring 35 eingesetzt ist. Dieser O-Ring 35 befindet sich somit zwischen dem Schraubenkopf 21 und dem einen Ende des Gewindeabschnittes 23, wobei er zur Lagefixierung zwischen Schraube 19 und Drehkreuz 12 mittels Formschluss dient. Auch er bewirkt nach Erreichen der Endposition (fertig montierte Dachantenne) eine Festlegung der Schraube 19 an dem Drehkreuz 12, um ein Lösen der Schraube 19 zu unterbinden.

Außerdem ist noch auf die Rastmittel 27 hinzuweisen, die in dieser Ausgestaltung wieder als separates Bauteil ausgebildet sind. Alternativ dazu ist es denkbar, diese Rastmittel nicht als separates Bauteil auszubilden, sondern sie einstückig mit der Bodenplatte 7 (wie dies in den Figuren 1 bis 4 der Fall ist) zu bilden.

### Bezugszeichenliste

- 1.: Dachantenne
- 2.: Dach
- 3.: Antennenhaube
- 4.: Leiterplatte
- 5.: Steckverbindung
- 6.: Dom
- 7.: Bodenplatte
- 8.: Gegenlager
- 9.: Innendichtung
- 10.: Außendichtung
- 11.: Rasthaken
- 12.: Drehkreuz
- 13.: Dachöffnung
- 14.: Anschlag
- 15.: Drehwinkel
- 16.: Ende
- 17.: Führungsrippe
- 18.: Sechskantvorsprung
- 19.: Schraube
- 20.: O-Ring
- 21.: Schraubenkopf
- 22.: Gewindeloser Abschnitt
- 23.: Gewindeabschnitt
- 24.: Umlaufende Nut
- 25.: Zylinderförmiger Vorsprung
- 26.: Rastmittel
- 27.: Träger
- 28.: Rasthaken
- 29.: Öffnung
- 30.: Grundfläche
- 31.: Begrenzungsmittel
- 32.: Auflagekante
- 33.: Ausschnitt
- 34.: Anschlag
- 35.: O-Ring

## Patentansprüche

1. Dachantenne (1) zur Montage auf einem Dach (2) eines Fahrzeuges, wobei die Dachantenne (1) eine Bodenplatte (7) sowie eine mit der Bodenplatte (7) verbindbare Antennenhaube (3) aufweist und unter der Antennenhaube (3) eine Leiterplatte (4) mit Antennenelementen und zumindest einer Steckverbindung (5) angeordnet ist, wobei die Bodenplatte (7) Befestigungsmittel für eine Endmontage aufweist, wobei die Befestigungsmittel als ein zentraler Dom (6) mit Schraubgewinde und ein mit dem Dom (6) zusammenwirkendes Drehkreuz (12) ausgebildet sind, **dadurch gekennzeichnet, dass** an dem Dom (6) zumindest zwei als ein erster O-Ring (20) und ein weiterer O-Ring (35) ausgebildete formelastische Elemente angeordnet und festgelegt sind, wobei der Dom (6) als eine Schraube (19) ausgebildet ist, wobei die Schraube (19) endseitig einem Schraubenkopf (21) abgewandt eine umlaufende Nut (24) zur Aufnahme des ersten O-Rings (20) aufweist und endseitig dem Schraubenkopf (21) zugewandt eine weitere umlaufende Nut zur Aufnahme des weiteren O-Rings (35) aufweist, wobei diese Elemente den Dom (6) bewegbar an dem Drehkreuz (12) und der Bodenplatte (7) fixieren.

2. Dachantenne (1) nach Anspruch 1, **dadurch gekennzeichnet, dass** die Bodenplatte (7) eine Senkung, insbesondere eine umlaufende Nut, zur Aufnahme des ersten O-Rings (20) in der Vormontageposition der Schraube (19) in Bezug auf das Drehkreuz (12) und dessen Festlegung an der Bodenplatte (7) aufweist.

3. Dachantenne (1) nach einem der vorhergehenden Ansprüche, **dadurch gekennzeichnet, dass** das Drehkreuz (12) derart ausgebildet ist, dass es mit seinen Enden (16) in einer Vormontageposition durch eine Dachöffnung (13) des Daches (2) vertikal hindurchgeführt werden kann und in seiner Endmontageposition mit seinen Enden (16) die Unterseite des Daches (2) hintergreift.

4. Dachtenne (1) nach einem der vorhergehenden Ansprüche, **dadurch gekennzeichnet, dass** an der Bodenplatte (7) zumindest ein Anschlag (14) zur Begrenzung des Drehwinkels (15) des Drehkreuzes (12) angeordnet ist.

5. Dachantenne (1) nach einem der vorhergehenden Ansprüche, **dadurch gekennzeichnet, dass** an der Bodenplatte (7) zumindest eine Führungsrippe (17), vorzugsweise zwei gegenüberliegende Führungsrippen (17) angeordnet sind.

6. Dachantenne (1) nach einem der vorhergehenden Ansprüche, **dadurch gekennzeichnet, dass** das Drehkreuz (12) in seiner Vormontageposition die zumindest eine Steckverbindung (5) überdeckt und in seiner Endmontageposition freigibt.

7. Dachantenne (1) nach einem der vorhergehenden Ansprüche, **dadurch gekennzeichnet, dass** der Drehwinkel (15) des Drehkreuzes (12) bei dessen Bewegung von der Vormontageposition in die Endmontageposition maximal 45 Grad beträgt.

8. Dachantenne (1) nach einem der vorhergehenden Ansprüche, **dadurch gekennzeichnet, dass** der Drehwinkel (15) des Drehkreuzes (12) bei dessen Bewegung von der Vormontageposition in die Endmontageposition von zumindest einem auf der Oberfläche des Daches (2) anlegbaren, an der Bodenplatte (6) angeordneten Gegenlager (8) begrenzt ist.

9. Dachantenne (1) nach einem der vorhergehenden Ansprüche, **dadurch gekennzeichnet, dass** das Drehkreuz (12) Mittel, insbesondere einen Sechskantvorsprung (18) zu seiner Betätigung mittels eines Werkzeuges aufweist.

10. Dachantenne (1) nach einem der vorhergehenden Ansprüche, **dadurch gekennzeichnet, dass** das Drehkreuz (12) genau vier in einem rechten Winkel zueinander angeordnete Arme aufweist.

## Claims

1. Roof antenna (1) for mounting on a roof (2) of a vehicle, wherein the roof antenna (1) has a base plate (7) and an antenna hood (3) that can be connected to the base plate (7) and, under the antenna hood (3), there is arranged a circuit board (4) with antenna elements and at least one plug-in connection (5), wherein the base plate (7) has fastening means for final mounting, wherein the fastening means are formed as a central dome (6) with a screw thread and a rotary cross (12) interacting with the dome (6), **characterized in that** at least two resilient elements formed as a first O-ring (20) and a further O-ring (35) are arranged and fixed on the dome (6), wherein the dome (6) is formed as a screw (19), wherein the screw (19) has a circumferential groove (24) for receiving the first O-ring (20) at the end facing away from a screw head (21), and has a further circumferential groove for receiving the further O-ring (35) at the end facing towards the screw head (21), wherein these elements fix the dome (6) movably to the rotary cross (12) and the base plate (7).

2. Roof antenna (1) according to Claim 1, **characterized in that** the base plate (7) has a counterbore, in particular a circumferential groove, for receiving the first O-ring (20) in the pre-mounting position of the screw (19) in relation to the rotary cross (12) and its fixing to the base plate (7).

3. Roof antenna (1) according to either of the preceding claims, **characterized in that** the rotary cross (12) is formed in such a way that it can be led vertically with its ends (16) through a roof opening (13) in the roof (2) in a pre-mounting position and, in its final mounting position, engages with its ends (16) behind the underside of the roof (2).

4. Roof antenna (1) according to any one of the preceding claims, **characterized in that** at least one stop (14) for limiting the rotational angle (15) of the rotary cross (12) is arranged on the base plate (7).

5. Roof antenna (1) according to any one of the preceding claims, **characterized in that** at least one guide rib (17), preferably two opposite guide ribs (17), are arranged on the base plate (7).

6. Roof antenna (1) according to any one of the preceding claims, **characterized in that** the rotary cross (12) covers the at least one plug-in connection (5) in its pre-mounting position and uncovers the same in its final mounting position.

7. Roof antenna (1) according to any one of the preceding claims, **characterized in that** the rotational angle (15) of the rotary cross (12) during its movement from the pre-mounting position into the final mounting position is at most 45 degrees.

8. Roof antenna (1) according to any one of the preceding claims, **characterized in that** the rotational angle (15) of the rotary cross (12) during its movement from the pre-mounting position into the final mounting position is limited by at least one counter-bearing (8) which is arranged on the base plate (6) and can be placed on the surface of the roof (2).

9. Roof antenna (1) according to any one of the preceding claims, **characterized in that** the rotary cross (12) has means, in particular a hexagonal projection (18), for its actuation by means of a tool.

10. Roof antenna (1) according to any one of the preceding claims, **characterized in that** the rotary cross (12) has exactly four arms arranged at right angles to one another.

## Revendications

1. Antenne de toit (1) pour le montage sur un toit (2) d'un véhicule, l'antenne de toit (1) présentant une plaque de fond (7) ainsi qu'un capot d'antenne (3) pouvant être relié à la plaque de fond (7) et une carte imprimée (4) comprenant des éléments d'antenne et au moins une connexion enfichable (5) étant agencée sous le capot d'antenne (3), la plaque de fond (7) présentant des moyens de fixation pour un montage final, les moyens de fixation étant configurés sous la forme d'un dôme central (6) comprenant un filetage de vis et d'une couronne de pivotement (12) coopérant avec le dôme (6), **caractérisée en ce qu'**au moins deux éléments à élasticité de forme configurés sous la forme d'un premier joint torique (20) et d'un autre joint torique (35) sont agencés et fixés sur le dôme (6), le dôme (6) étant configuré sous la forme d'une vis (19), la vis (19) présentant, du côté de l'extrémité détournée d'une tête de vis (21), une rainure périphérique (24) pour la réception du premier joint torique (20) et présentant, du côté de l'extrémité tournée vers la tête de vis (21), une autre rainure périphérique pour la réception de l'autre joint torique (35), ces éléments fixant le dôme (6) de manière mobile sur la couronne de pivotement (12) et la plaque de fond (7) .

2. Antenne de toit (1) selon la revendication 1, **caractérisée en ce que** la plaque de fond (7) présente un creux, notamment une rainure périphérique, pour la réception du premier joint torique (20) dans la position de prémontage de la vis (19) par rapport à la couronne de pivotement (12) et sa fixation sur la plaque de fond (7).

3. Antenne de toit (1) selon l'une quelconque des revendications précédentes, **caractérisée en ce que** la couronne de pivotement (12) est configurée de telle sorte que, dans une position de prémontage, elle peut être passée verticalement à travers une ouverture de toit (13) du toit (2) par ses extrémités (16) et, dans sa position de montage finale, elle s'engage derrière le côté inférieur du toit (2) par ses extrémités (16).

4. Antenne de toit (1) selon l'une quelconque des revendications précédentes, **caractérisée en ce qu'**au moins une butée (14) est agencée sur la plaque de fond (7) pour limiter l'angle de rotation (15) de la couronne de pivotement (12).

5. Antenne de toit (1) selon l'une quelconque des revendications précédentes, **caractérisée en ce qu'**au moins une nervure de guidage (17), de préférence deux nervures de guidage (17) opposées sont agencées sur la plaque de fond (7).

6. Antenne de toit (1) selon l'une quelconque des revendications précédentes, **caractérisée en ce que** la couronne de pivotement (12) recouvre l'au moins une connexion enfichable (5) dans sa position de prémontage et la libère dans sa position de montage final.

7. Antenne de toit (1) selon l'une quelconque des revendications précédentes, **caractérisée en ce que** l'angle de rotation (15) de la couronne de pivotement (12) est de 45 degrés maximum lors de son déplacement de la position de prémontage à la position de montage final.

8. Antenne de toit (1) selon l'une quelconque des revendications précédentes, **caractérisée en ce que** l'angle de rotation (15) de la couronne de pivotement (12), lors de son déplacement de la position de prémontage à la position de montage final, est limité par au moins un contre-appui (8) pouvant être appliqué sur la surface du toit (2), agencé sur la plaque de fond (6).

9. Antenne de toit (1) selon l'une quelconque des revendications précédentes, **caractérisée en ce que** la couronne de pivotement (12) présente des moyens, notamment une saillie hexagonale (18), pour son actionnement au moyen d'un outil.

10. Antenne de toit (1) selon l'une quelconque des revendications précédentes, **caractérisée en ce que** la couronne de pivotement (12) présente exactement quatre bras agencés à angle droit les uns par rapport aux autres.
